# EUROPEAN PATENT SPECIFICATION

(11) **EP 2 787 324 B1**
(45) Date of publication and mention of the grant of the patent: **25.09.2019**
(21) Application number: 11876603.9
(22) Date of filing: 28.11.2011
(51) Int. Cl.: G01C 21/36, G08G 1/0962, B60K 35/00

(54) **DISPLAY DEVICE AND CONTROL METHOD**
ANZEIGEVORRICHTUNG UND STEUERVERFAHREN DAFÜR
DISPOSITIF D'AFFICHAGE ET PROCÉDÉ DE COMMANDE

(43) Date of publication of application: 08.10.2014
(73) Proprietor: Pioneer Corporation, Tokyo 113-0021 (JP)
(72) Inventor: FUJIE, Tetsuya, Kawagoe-shi, Saitama 350-8555 (JP)
(74) Representative: Gill Jennings & Every LLP
(86) International application number: PCT/JP2011/077403
(87) International publication number: WO 2013/080283

(56) References cited:
- WO-A1-2011/004434
- JP-A- 2001 116 565
- JP-A- 2005 069 776
- JP-A- 2006 177 790
- JP-A- 2006 177 790
- JP-A- 2006 313 088
- JP-A- 2007 071 666
- JP-A- 2008 202 987
- US-A1- 2005 288 851
- US-B1- 6 427 118

## Description

### TECHNICAL FIELD

The present invention relates to a technology for displaying information.

### BACKGROUND TECHNIQUE

Conventionally, there is known a navigation device which changes a display mode of information on a facility depending on the position of the facility. For example, Patent Reference-1 discloses a navigation device which highlights information on a facility existing on the left side of the road in a condition that it is difficult to drop by a facility existing on the right side. Patent Refernece-2 discloses a technique for superimposing navigation information on a front scenery image of the vehicle.

Patent Reference-1: Japanese Patent Application Laid-open under No. 2011-043383
Patent Reference-2: Japanese Patent Application Laid-open under No. 2008-202987

### DISCLOSURE OF INVENTION

### PROBLEM TO BE SOLVED BY THE INVENTION

When the running lane is closer to the oncoming lane than the road shoulder at the time of travelling on a multi-lane road, there is a case that it is difficult to safely drop by a facility having a short distance to the present position of the vehicle among facilities existing along the road. Thus, in this case, it is a waste of display space and not preferable in term of the safety to display information on any facility hard to safely drop by.

The above is an example of the problem to be solved by the present invention. An object of the present invention is to provide a display device and a control method thereof capable of suppressing display of unnecessary information and displaying information on a facility without losing the safety. JP2006/177790 discloses a display control unit.

One invention is a display device according to claim 1.

Another invention is a control method executed by a display device according to claim 9.

### BRIEF DESCRIPTION OF THE DRAWINGS

FIG. 1 illustrates an example of the configuration of a display system according to the embodiment.
FIG. 2 illustrates the schematic configuration of a navigation device.
FIG. 3 illustrates the schematic configuration of a head-up display.
FIG. 4 illustrates a functional block diagram of the display system according to the embodiment.
FIG. 5 is a concrete example of a POI display timing table.
FIG. 6 illustrates the top view of a road having three travelling direction lanes and three oncoming lanes.
FIG. 7 is a flowchart indicating the procedure of the process executed by an image process unit and a POI display range determination unit.
FIG. 8 is a flowchart indicating the procedure of the process executed by a distance calculation unit.
FIG. 9 is a flowchart indicating procedure of the process executed by a drawing process unit and a display output unit.
FIG. 10 illustrates the schematic configuration of a head-up display according to the modification.

### DETAILED DESCRIPTION OF THE PREFERRED EMBODIMENTS

According to an example, there is provided a display device including: a present position information obtaining unit configured to measure a present position of a moving body to obtain present position information thereof; and a display control unit configured to display information on a facility on a transparent member positionedbetween a viewpoint of a traveler in the moving body and scenery in traveling direction of the moving body based on the present position information, the facility being included in the scenery and existing within a first predetermined distance from the present position of the moving body, wherein the display control unit changes the first predetermined distance based on a position of a travelling lane on a road where the moving body is travelling.

The display device is a head-up display, for example, and includes a present position information obtaining unit and a display control unit. The present position information obtaining unit measures a present position of a moving body to obtain present position information thereof. The display control unit displays information on a facility on a transparent member positionedbetween a viewpoint of a traveler in the moving body and scenery in traveling direction of the moving body based on the present position information. The facility herein is included in the scenery and exists within a first predetermined distance from the present position of the moving body. The term "facility" herein indicates not only a building but also another target to be setas a destination such as a car park. The display control unit changes the first predetermined distance based on a position of a travelling lane on a road where the moving body is travelling.

Generally, the necessity of lane change for dropping by a facility and the number of lanes to be changed through the lane change depends on the position of the running lane, and the start timing of driving operation for dropping by the facility also depends on it. Thus, in this mode, on the basis of the position of the lane where the moving body is travelling on the road, the display device changes the threshold of the distance between the present position and the facility for determining whether to display information on the facility or not. Thereby, the display device can suppress indication of unnecessary information and display information on a safely-accessible facility.

In one mode of the display device, the display control unit changes the first predetermined distance in accordance with distance between the lane where the moving body is travelling and the facility. Even in this mode, preferably, the display device can suppress indication of unnecessary information and display information on a safely-accessible facility.

In another mode of the display device, the display control unit changes the first predetermined distance in accordance with speed of the moving body. Generally, in order to drop by a facility, it is necessary to turn right or left and therefore necessary to change the vehicle speed to less than a predetermined speed by the time the vehicle reaches the turn point. Thus, ease of access to a facility depends on the running speed. In this mode, the display device can more precisely display the information only on a safely-accessible facility.

In still another mode of the display device, in a case that the moving body is travelling on a lane farther from facilities, the display control unit displays information on a facility existing farther from the moving body compared to a case that the moving body is travelling on a lane closer to the facilities. In this mode, preferably, the display device can suppress indication of unnecessary information and display the information on a safely-accessible facility.

In still another mode of the display device, the display control unit displays the information on the facility at a position in accordance with a position of the facility in the scenery seen via the transparent member. Thereby, the display control unit can let the driver visually recognize the facility and the information thereon in a state that these two are preferably linked.

In still another mode of the display device, the display control unit does not display the information on a facility existing within a second predetermined distance smaller than the first predetermined distance from the present position of the moving body, and the display control unit changes the second predetermined distance based on the position of the travelling lane on the road where the moving body is travelling. In this mode, preferably, the display device can suppress indication of unnecessary information on a facility difficult to safely drop by, thereby to enhance the safety and secure a space for displaying information.

In still another mode of the display device, the display control unit changes the second predetermined distance in accordance with speed of the moving body. In this mode, the display device can suppress indication of unnecessary information on a facility difficult to safely drop by thereby to enhance the safety and secure a space for displaying information.

In still another mode of the display device, in a case that speed of the moving body is faster, the display control unit displays information on a facility existing farther from the moving body compared to a case that the speed of the moving body is slower. In this mode, the display device can more precisely display the information only on a safely-accessible facility.

In still another mode of the display device, the display control unit does not display the information on a facility existing within a second predetermined distance smaller than the first predetermined distance from the present position of the moving body, and the display control unit changes the second predetermined distance based on speed of the moving body. In this mode, the display device can suppress indication of unnecessary information on a facility difficult to safely drop by, thereby to enhance the safety and secure a space for displaying information.

In still another mode of the display device, the display control unit changes the first predetermined distance in accordance with traffic jam information on the road where the moving body is travelling. In this mode, the display device can suppress indication of unnecessary information on a facility difficult to safely drop by due to a traffic jam, thereby to enhance the safety and secure a space for displaying information.

According to another example, there is provided a display device including: a present position information obtaining unit configured to measure a present position of a moving body to obtain present position information thereof; and an image obtaining unit configured to obtain a front scenery image that is either a photographed image captured toward travelling direction of the moving body or an image representing scenery in the traveling direction; and a display control unit configured to superimpose information on a facility on the front scenery image based on the present position information, the facility being included in the front scenery image and existing within a first predetermined distance from the present position of the moving body, wherein the display control unit changes the first predetermined distance based on a position of a travelling lane on a road where the moving body is travelling. The term "an image representing scenery in the traveling direction" herein indicates a computer graphic image, for example. Even in this embodiment, the display device can suppress indication of unnecessary information and display information on a safely-accessible facility.

According to still another example, there is provided a display device including: a display unit configured to let a traveler in a moving body visually recognize scenery in front of the moving body and information on a facility existing in the scenery; and a display control unit configured to display the information on the facility on the display unit at a time when distance between the moving body and the facility is equal to or shorter than a first predetermined distance, wherein the display control unit changes the first predetermined distance based on a position of a travelling lane on a road where the moving body is travelling. Even in this embodiment, the display device can suppress indication of unnecessary information and display information on a safely-accessible facility.

According to still another example, there is provided a display device including: a present position information obtaining unit configured to measure a present position of a moving body to obtain present position information thereof; a transparent member provided in front of a traveler in the moving body and capable of displaying information; and a display control unit configured to display information on a facility on the transparent member based on the present position information, the facility existing in scenery seen via the transparent member by the traveler, wherein the display control unit displays information on the facility existing within a first predetermined distance from the present position of the moving body and changes the target facility for displaying information in accordance with a position of a travelling lane on a road where the moving body is travelling. Even in this embodiment, the display device can suppress indication of unnecessary information and display information on a safely-accessible facility.

According to still another example, there is provided a control method executed by a display device, including: a present position information obtaining process for measuring a present position of a moving body to obtain present position information thereof; and a display control process for displaying information on a facility on a transparent member positioned between a viewpoint of a traveler in the moving body and scenery in traveling direction of the moving body based on the present position information, the facility being included in the scenery and existing within a first predetermined distance from the present position of the moving body, wherein in the display control process, the first predetermined distance is changed based on a position of a travelling lane on a road where the moving body is travelling. By executing the above-mentioned control method, the display device can suppress indication of unnecessary information and display information on a safely-accessible facility.

### EMBODIMENT

Now, a preferred embodiment of the present invention will be described below with reference to the attached drawings.

### [System Configuration]

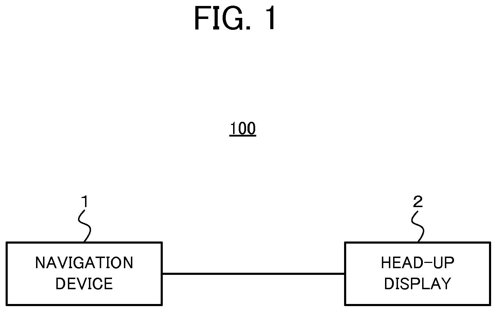

FIG. 1 illustrates an example of the configuration of a display system 100 according to the embodiment. As illustrated in FIG. 1, the display system 100 includes a navigation device 1 and a head-up display 2. The display system 100 is mounted on a vehicle. It is noted that all functions of the navigation device 1 may be incorporated into the head-up display 2.

The navigation device 1 has a guide function of a route from a departure place to a destination. Examples of the navigation device 1 include a stationary navigation device set in a vehicle, a PND (Portable Navigation Device) and a cell phone such as a smart phone.

The head-up display 2 generates an image indicating information for assisting the driving operation such as map information indicating the present position, route guide information and a running speed, and lets the driver visually recognize the image as a virtual image from the position of the eye (eye point) of the driver. The navigation device 1 supplies the head-up display 2 with various kinds of information used for the navigation processing such as the position of the vehicle, the running speed of the vehicle, map information and facility data.

It is noted that the navigation device 1 may be held by a cradle if the navigation device 1 is a cell phone such as a smart phone. In this case, the navigation device 1 may exchange the information with the head-up display 2 via the cradle.

### [Configuration of Navigation Device]

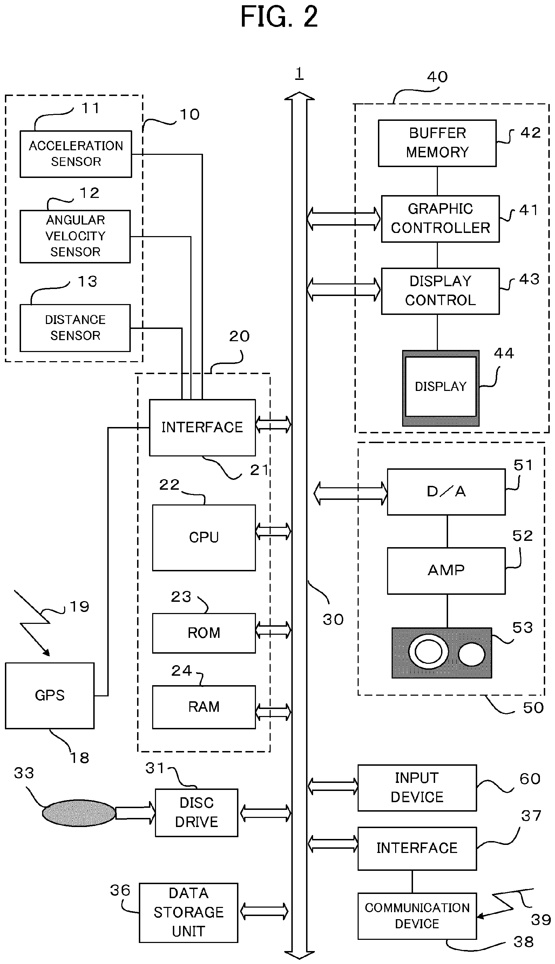

FIG. 2 shows a device configuration of the navigation device 1 mounted on a vehicle. As shown in FIG. 2, the navigation device 1 includes a stand-alone position measurement device 10, a GPS receiver 18, a system controller 20, a disc drive 31, a data storage unit 36, a communication interface 37, a communication device 38, a display unit 40, a sound output unit 50, and an input device 60.

The stand-alone position measurement device 10 includes an acceleration sensor 11, an angular velocity sensor 12 and a distance sensor 13. The acceleration sensor 11 includes a piezoelectric element, for example, and detects the acceleration degree of the vehicle and outputs the acceleration data. The angular velocity sensor 12 includes a vibration gyroscope, for example, and detects the angular velocity of the vehicle at the time of changing the direction of the vehicle and outputs the angular velocity data and the relative direction data. The distance sensor 13 measures vehicle speed pulses including a pulse signal generated with the wheel rotation of the vehicle.

The GPS receiver 18 receives an electric wave 19 for transmitting downlink data including position measurement data from plural GPS satellites, which is used for detecting the absolute position (hereinafter referred to as "present position ") of the vehicle from longitude and latitude information. The GPS receiver 18 is an example of "the present position information obtaining unit" in the present invention.

The system controller 20 includes an interface 21, a CPU (Center Processing Unit) 22, a ROM (Read Only Memory) 23 and a RAM (Random Access Memory) 24, and is configured to control the entire navigation device 1.

The interface 21 executes the interface operation with the acceleration sensor 11, the angular velocity sensor 12, the distance sensor 13 and the GPS receiver 18. Then, the interface 21 inputs the vehicle speed pulse, the acceleration data, the relative direction data, the angular velocity data, the GPS measurement data and the absolute direction data into the system controller 20. The CPU 22 controls the entire system controller 20. The ROM 23 includes a non-volatile memory (not shown) in which a control program for controlling the system controller 20 is stored. The RAM 24 readably stores various kinds of data such as route data preset by the user via the input device 60, and supplies a working area to the CPU 22.

The system controller 20, the disc drive 31 such as a CD-ROM drive or a DVD-ROM drive, the data storage unit 36, the communication interface 37, the display unit 40, the sound output unit 50 and the input device 60 are connected to each other via a bus line 30.

Under the control of the system controller 20, the disc drive 31 reads contents data such as sound data and video data from a disc 33 such as a CD and a DVD to output the contents data. The disc drive 31 may be the CD-ROM drive or the DVD-ROM drive, or may be a drive compatible between the CD and the DVD. The data storage unit 36 includes a HDD, for example, and stores various kinds of data used for a navigation process such as map data. The communication device 38 includes an FM tuner or a beacon receiver, a mobile phone and a dedicated communication card for example, and obtains information (hereinafter referred to as "VICS information") delivered from a VICS (Vehicle Information Communication System) center by the electric wave 39. The communication interface 37 executes the interface operation of the communication device 38 to input the VICS information into the system controller 20. The communication device 38 sends information on the present position obtained from the GPS receiver 18 and the map data to the head-up display 2.

The display unit 40 displays various kinds of display data on a display screen of a display 44 under the control of the system controller 20. Concretely, the system controller 20 reads the map data from the data storage unit 36, and the display unit 40 displays, on its display screen, the map data read from the data storage unit 36 by the system controller 20. The display unit 40 includes a graphic controller 41 for controlling the entire display unit 40 on the basis of the control data transmitted from the CPU 22 via the bus line 30, a buffer memory 42 having a memory such as a VRAM (Video RAM) for temporarily storing immediately displayable image information, a display control unit 43 for controlling a display 44 such as a liquid crystal and a CRT (Cathode Ray Tube) on the basis of the image data outputted from the graphic controller 41, and the display 44. The display 44 is formed by a liquid crystal display device of the opposite angle 5-10 inches, and is mounted in the vicinity of a front panel of the vehicle.

The sound output unit 50 includes a D/A converter 51 for executing D/A (Digital to Analog) conversion of the sound digital data transmitted from the CD-ROM drive 31, a DVD-ROM 32 or the RAM 24 via the bus line 30 under the control of the system controller 20, an amplifier (AMP) 52 for amplifying a sound analog signal outputted from the D/A converter 51, and a speaker 53 for converting the amplified sound analog signal into the sound and outputting it to the vehicle compartment.

The input device 60 includes keys, switches, buttons, a remote controller and a sound input device, which are used for inputting various kinds of commands and data. The input device 60 is arranged in the vicinity of the display 44 and a front panel of a main body of an on-vehicle electric system loaded on the vehicle . Additionally, in such a case that the display 44 is in a touch panel system, a touch panel provided on the display screen of the display 44 also functions as the input device 60.

### [Configuration of Head-up Display]

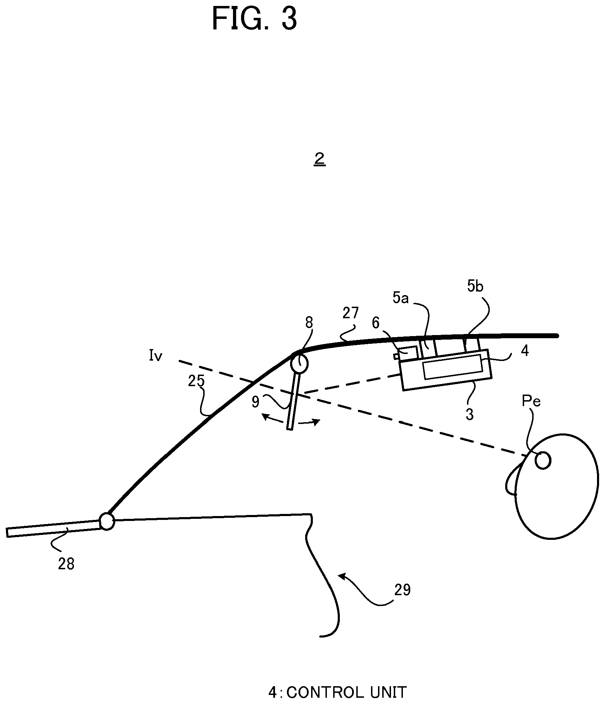

FIG. 3 illustrates the schematic configuration of the head-up display 2. As illustrated in FIG. 3, the head-up display 2 according to the embodiment includes a light source unit 3, a camera 6 and a combiner 9, and is installed in a vehicle having a front window 25, a ceiling board 27, a hood 28 and a dashboard 29.

The light source unit 3 is provided on the ceiling board 27 in the vehicle interior through the support parts 5a and 5b, and emits the light for displaying an image illustrating driver assist information towards the combiner 9. In particular, under the control of the control unit 4, the light source unit 3 generates an original image (real image) of the display image in the light source unit 3, and emits the light for displaying the image towards the combiner 9 thereby to let the driver visually recognize the virtual image "Iv" via the combiner 9. The light source unit 3 is an example of "the display unit" in the present invention.

The display image emitted from the light source unit 3 is projected onto the combiner 9, and the combiner 9 shows the display image as the virtual image Iv by reflecting the display image towards the eye point "Pe" of the driver. The combiner 9 has a support shaft 8 provided on the ceiling board 27 and rotates on the support shaft 8. The combiner 9 is an example of "transparent member" in the present invention. The support shaft 8 is provided on the ceiling board 27 near the top edge of the front window 25, i.e., near the position of a sun visor (not shown) for the driver. It is noted that the support shaft 8 may be provided in place of the above-mentioned sun visor.

The control unit 4 includes a CPU, a RAM and a ROM which are not shown, and controls the entire head-up display 2. The control unit 4 is capable of communicating with the navigation device 1 and receives various kinds of information used for the navigation processing from the navigation device 1.

In particular, according to the embodiment, when the scenery seen via the combiner 9 includes a POI (Point of Interest), the control unit 4 lets display (referred to as "POI display") such as a mark indicating the POI and information relating to the POI be seen as the virtual image Iv at a position corresponding to the position where the POI is seen. The term "POI" herein indicates a facility registered in map data stored on the navigation device 1 or the head-up display 2, or a user-specified facility selected from them. The control unit 4 is an example of "the display control unit" and "the image obtaining unit" in the present invention.

The camera 6 is directed to the front of the vehicle and generates an image (referred to as "front image If") of the scenery in the range overlapping with the virtual image Iv to store it on its frame memory. Thereafter, the front image If is supplied to the control unit 4 by wired or wireless communication. The camera 6 may be fixed on an arbitrary position such as a surface of the light source unit 3 other than the top surface, the ceiling board 27 and the dashboard 29 or may be embedded in the light source unit 3, though the camera 6 in FIG. 3 is provided on the top surface of the light source unit 3 where the support members 5a and 5b are provided.

### [Control Method]

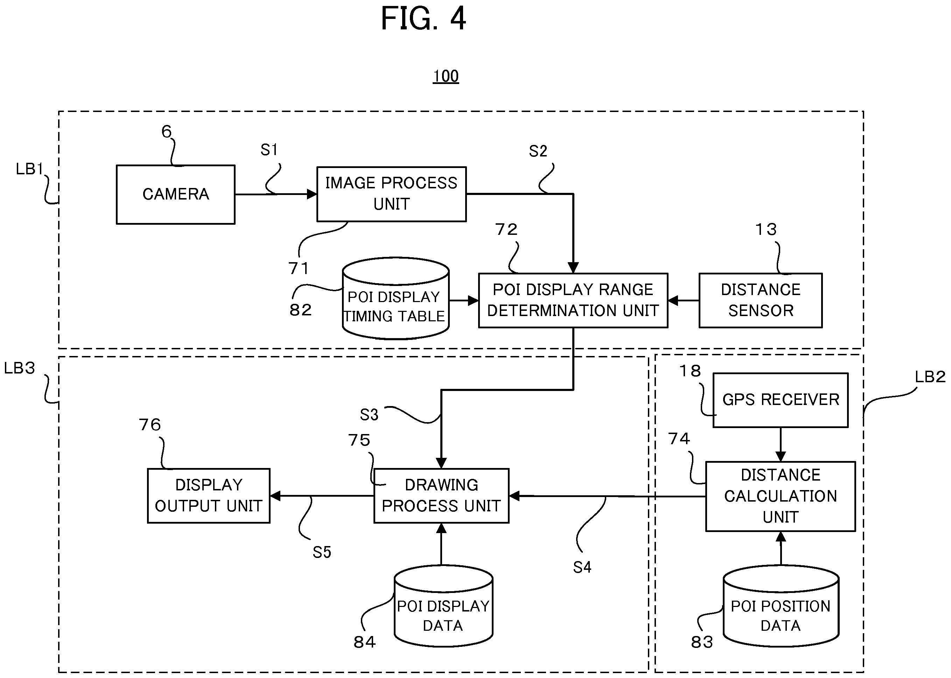

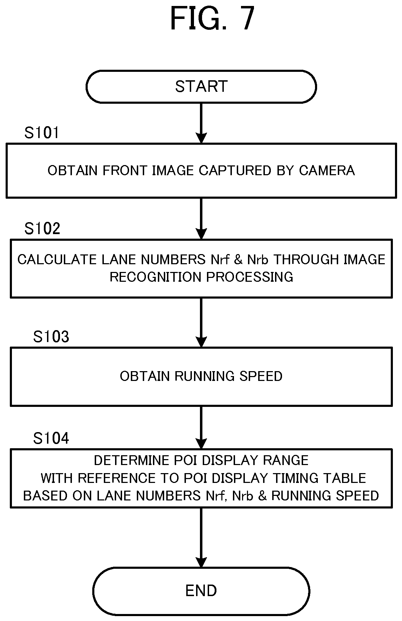

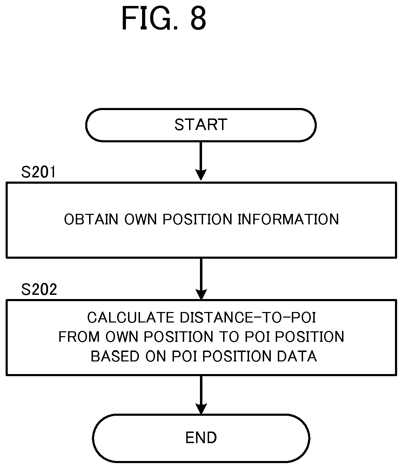

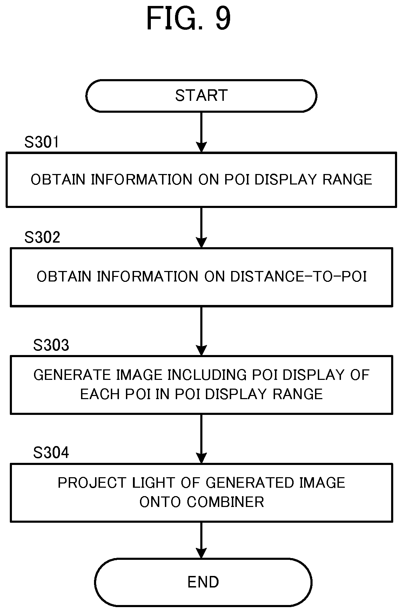

Next, a description will be given of the control method according to the embodiment. FIG. 4 illustrates a functional block diagram of the display system 100 according to the embodiment. The control unit 4 includes an image process unit 71, a POI display range determination unit 72, a distance calculation unit 74, a drawing process unit 75 and a display output unit 76. On the memory embedded in the light source unit 3 or the data storage unit 36, there are stored a POI display timing table 82 to be mentioned later, POI position data 83 which is position data of each POI and POI display data 84 necessary for showing a POI display corresponding to each POI. In FIG. 4, the process flow specified by the dashed frame "LB1" corresponds to the flowchart illustrated in FIG. 7 to be mentioned later, the process flow specified by the dashed frame "LB2" corresponds to the flowchart illustrated in FIG. 8 to be mentioned later, and the process flow specified by the dashed frame "LB3" corresponds to the flowchart illustrated in FIG. 9 to be mentioned later.

The image process unit 71 is supplied with a signal "S1" indicating the front image If from the camera 6, and recognizes the lane (simply referred to as "travelling lane") where the vehicle is travelling on the basis of the front image If indicated by the supplied signal S1. Concretely, the image process unit 71 extracts each lane from the front image If by a known image processing method and recognizes the number of lanes (referred to as "travelling direction lanes") for running towards the traveling direction. In addition, the image process unit 71 calculates the lane number (referred to as "travelling direction lane number Nrf") of the travelling lane in a condition that the travelling direction lanes are sequentially numbered from the road shoulder side. As mentioned later, the travelling direction lane number Nrf is used for selecting the target POI (referred to as "display target POI") of the POI display from POIs in the vicinity of the travelling direction lanes.

The image process unit 71 also calculates the lane number (referred to as "oncoming lane number Nrb") of the travelling lane counted in a condition that the travelling direction lanes are sequentially numbered from the oncoming lane side. As mentioned later, the oncoming lane number Nrb is used for selecting the target POI of the POI display from POIs in the vicinity of the oncoming lanes. Then, the image process unit 71 supplies the POI display range determination unit 72 with a signal "S2" indicating the travelling direction lane number Nrf and the oncoming lane number Nrb.

With reference to the POI display timing table 82 and on the basis of the travelling direction lane number Nrf, the oncoming lane number Nrb and the running speed of the vehicle, the POI display range determination unit 72 determines the display range (referred to as "POI display range") of the display target POI from the present position of the vehicle. The POI display range indicates the range of distance from the present position of the vehicle towards the traveling direction (i.e., the direction along with the travelling lane). More specifically, the POI display range determination unit 72 determines the POI display range (referred to as "POI display range on the travelling direction lane side") for selecting the display target POI from the POIs existing near the travelling direction lanes and the POI display range (referred to as "POI display range on the oncoming lane side") for selecting the display target POI from the POIs existing near the oncoming lanes. Then, the POI display range determination unit 72 sends a signal "S3" indicating the determined POI display range on the travelling direction lane side and the determined POI display range on the oncoming lane side to the drawing process unit 75. The upper limit value of the POI display range is an example of "the first predetermined distance" according to the invention, and the lower limit value of the POI display range is an example of "the second predetermined distance" according to the present invention.

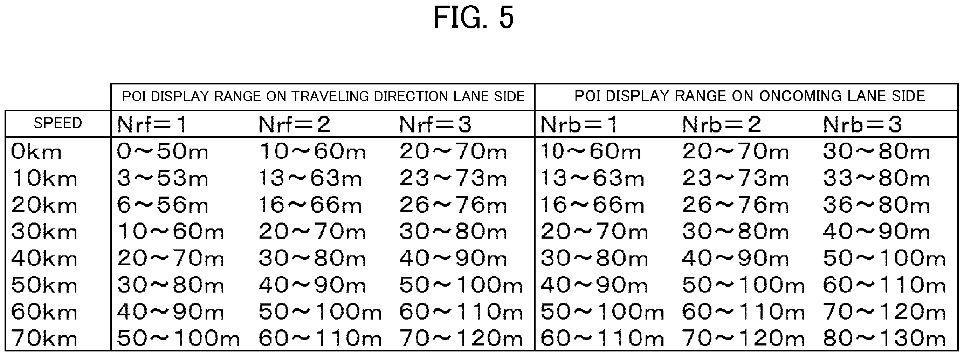

A description will be given of the POI display timing table 82 with reference to FIG. 5. FIG. 5 is a concrete example of the POI display timing table 82. The term "SPEED" in FIG. 5 herein indicates the running speed of the vehicle.

As shown in FIG. 5, the larger the travelling direction lane number Nrf is, i.e., the shorter the distance between the travelling lane and the oncoming lane is, the farther the POI display range on the travelling direction lane side shifts away from the present position of the vehicle. Generally, in case of dropping by a POI existing along the travelling direction lanes, the larger the travelling direction lane number Nrf is, i.e., the shorter the distance between the travelling lane and the oncoming lane is, the higher the necessity of the lane change becomes and the longer the distance, which is moving distance necessary for dropping by the POI, from the present position of the vehicle to the POI becomes. In consideration of the above facts, in order to suppress the unnecessary POI display corresponding to a POI difficult to drop by, the POI display range determination unit 72 shifts the POI display range on the travelling direction lane side away from the present position of the vehicle as the travelling direction lane number Nrf is large. Thereby, the head-up display 2 takes advantage of the saved display space of the unnecessary POI display to display any other helpful information while enhancing the safety.

In the same way, the larger the oncoming lane number Nrb is, i.e., the longer the distance between the travelling lane and the oncoming lane is, the farther the POI display range on the oncoming lane side shifts away from the present position of the vehicle. Generally, in case of dropping by a POI existing along the oncoming lanes, the longer the distance between the travelling lane and the oncoming lane is, the higher the necessity of the lane change becomes and the longer the distance necessary for dropping by the POI from the present position of the vehicle to the POI becomes. In consideration of the above facts, in order to suppress the unnecessary POI display corresponding to a POI difficult to drop by, the POI display range determination unit 72 shifts the POI display range on the oncoming lane side away from the present position of the vehicle as the oncoming lane number Nrb is large. Thereby, the head-up display 2 takes advantage of the saved display space of unnecessary POI display to display any other helpful information while enhancing the safety.

Furthermore, as illustrated in FIG. 5, in either case of the POI display range on the travelling direction lane side and the POI display range on the oncoming lane side, the POI display range shifts away from the present position of the vehicle as the running speed of the vehicle is high. Namely, the higher the running speed is, the earlier the timing of the POI display becomes. Generally, the higher the running speed is, the longer the distance necessary for safely dropping by the POI from the present position of the vehicle to the POI becomes. In consideration of the above facts, the POI display range determination unit 72 shifts the POI display range away from the present position of the vehicle as the running speed is high. Thereby, the head-up display 2 suppresses unnecessary POI display corresponding to a POI difficult to drop by, and shows the POI display only corresponding to a safely-accessible POI.

A description will be given of the distance calculation unit 74 with reference to FIG. 4 again. The distance calculation unit 74 receives the present position information indicating the latitude and longitude of the present position of the vehicle from the GPS receiver 18. Then, by referring to the POI position data 83, the distance calculation unit 74 calculates distance (referred to as "distance-to-POI") from the present position of the vehicle to each POI. The distance-to-POI maybe running distance necessary for the vehicle to move from the present position of the vehicle to the POI, or linear distance from the present position of the vehicle to the POI. It is noted that the POI whose distance-to-POI is to be calculated exists within the range where the driver can see the POI via the combiner 9 and exists on either side of the travelling direction lane and the oncoming lane. Then, the distance calculation unit 74 supplies a control signal "S4" indicating the calculated distance-to-POI to the drawing process unit 75.

The drawing process unit 75 determines the display target POI based on the POI display range indicated by the control signal S3 supplied from the POI display range determination unit 72 and the distance-to-POI of each POI indicated by the control signal S4 supplied from the distance calculation unit 74. Concretely, the drawing process unit 75 compares the POI display range on the travelling direction lane side to the distance-to-POI of each POI existing on the travelling direction lane side and selects the display target POI from the POIs existing on the travelling direction lane side. The drawing process unit 75 also compares the POI display range on the oncoming lane side to the distance-to-POI of each POI on the oncoming lane side and selects the display target POI from the POIs on the oncoming lane side.

Next, with reference to the POI display data 84 corresponding to the determined display target POI, the drawing process unit 75 generates an image including the POI display of the display target POI and supplies the display output unit 76 with a signal "S5" indicating the image. Then, the display output unit 76 projects light for displaying the image onto the combiner 9 based on the signal S5 supplied from the drawing process unit 75.

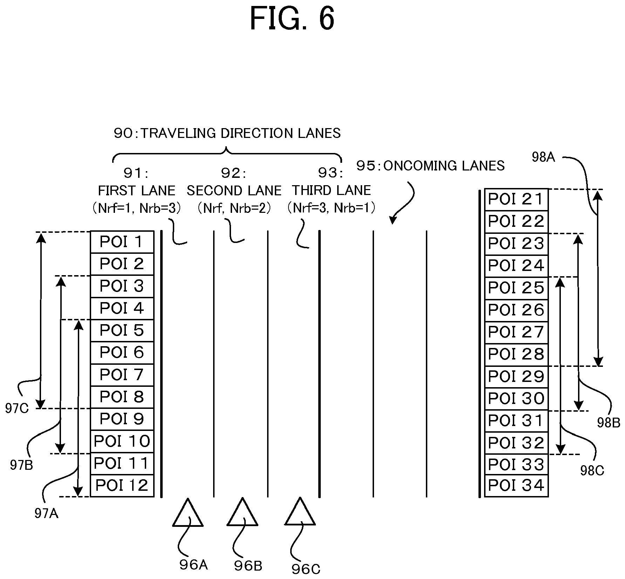

Next, with reference to FIG. 6, a description will be given of a concrete example indicating different POI display ranges depending on the position of the travelling lane. FIG. 6 illustrates the top view of the road having three travelling direction lanes and three oncoming lanes. On the travelling direction lane side of the road, there are POIs corresponding to "POI 1" to "POI 12", and on the oncoming lane side of the road, there are POIs corresponding to "POI 21" to "POI 34". In FIG. 6, the arrow "97A" indicates the POI display range on the travelling direction lane side and the arrow "98A" indicates the POI display range on the oncoming lane side in the case that the present position of the vehicle is represented by the mark "96A" on the first lane 91. The arrow "97B" indicates the POI display range on the travelling direction lane side and the arrow "98B" indicates the POI display range on the oncoming lane side in the case that the present position of the vehicle is represented by the mark "96B" on the second lane 92. The arrow "97C" indicates the POI display range on the travelling direction lane side and the arrow "98C" indicates the POI display range on the oncoming lane side in the case that the present position of the vehicle is represented by the mark "96C" on the third lane 93.

As shown in FIG. 6, when the present position of the vehicle corresponds to the mark 96A on the first lane 91, the travelling direction lane number Nrf is "1" and the vehicle can easily drop by a POI existing on the travelling direction lane side compared to the case that the present position of the vehicle corresponds to the mark 96B on the second lane 92 or to the mark 96C on the third lane 93. Thus, the POI display range on the travelling direction lane side in this case is set to the range closer to the present position of the vehicle than the POI display range in the case that the present position of the vehicle is represented by the mark 96B or 96C. Namely, the range is set so that the POIs "POI 5" to "POI 12" are the display target POIs.

When the present position of the vehicle is represented by the mark 96C on the third lane 93, the travelling direction lane number Nrf is "3" and it is necessary for the vehicle to change more lanes to drop by a POI on the travelling direction lane side compared to the case that the present position of the vehicle corresponds to the mark 96A on the first lane 91 or the mark 96B on the second lane 92. Thus, the POI display range on the travelling direction lane side in this case is set to the range farther from the present position of the vehicle than the POI display range in the case that the present position of the vehicle is represented by the mark 96A or 96B. Namely, the range is set so that the POIs "POI 1" to "POI 8" are the display target POIs.

When the present position of the vehicle corresponds to the mark 96A on the first lane 91, the oncoming lane number Nrb is "3" and it is necessary for the vehicle to change more lanes to drop by a POI on the oncoming lane side compared to the case that the present position of the vehicle corresponds to the mark 96B on the second lane 92 or the mark 96C on the third lane 93. Thus, the POI display range on the oncoming lane side in this case is set to the range farther from the present position of the vehicle than the POI display range in the case that the present position of the vehicle is represented by the mark 96B or 96C. Namely, the range is set so that the POIs "POI 21" to "POI 28" are the display target POIs.

When the present position of the vehicle corresponds to the mark 96C on the third lane 93, the oncoming lane number Nrb is "1" and the vehicle can easily drop by a POI on the oncoming lane side compared to the case that the present position of the vehicle corresponds to the mark 96A on the first lane 91 to the mark 96B on the second lane 92. Thus, the POI display range on the oncoming lane side in this case is set to the range closer to the present position of the vehicle than the POI display range in the case that the present position of the vehicle is represented by the mark 96A or 96B. Namely, the range is set so that the POIs "POI 25" to "POI 32" are the display target POIs.

### [Process Flow]

Next, a description will be given of the procedures of the process according to the embodiment with reference to FIGS. 7 to 9.

FIG. 7 is a flowchart indicating the procedure of the process executed by the image process unit 71 and the POI display range determination unit 72. The flowchart illustrated in FIG. 7 is repeatedly executed in a predetermined cycle, for example.

First, the image process unit 71 obtains the front image If captured by the camera 6 (step S101) . Then, the image process unit 71 calculates the travelling direction lane number Nrf and the oncoming lane number Nrb through image recognition processing (step S102). Concretely, the image process unit 71 recognizes each lane of the travelling direction lanes including the travelling lane thereby to calculate the travelling direction lane number Nrf and the oncoming lane number Nrb.

Next, the POI display range determination unit 72 obtains the running speed from the distance sensor 13 (step S103). On the basis of the travelling direction lane number Nrf, the oncoming lane number Nrb and the running speed, the POI display range determination unit 72 determines the POI display range with reference to the POI display timing table 82 (step S104). Concretely, the POI display range determination unit 72 refers to the POI display timing table 82 by using the travelling direction lane number Nrf and the running speed as input values thereby to determine the POI display range on the travelling direction lane side, and refers to the POI display timing table 82 by using the oncoming lane number Nrb and the running speed as input values thereby to determine the POI display range on the oncoming lane side.

FIG. 8 is a flowchart indicating the procedure of the process executed by the distance calculation unit 74. The distance calculation unit 74 repeatedly executes the flowchart in FIG. 8 in a predetermined cycle.

The distance calculation unit 74 obtains the own position information (step S201). Concretely, the distance calculation unit 74 receives the own position information from the GPS receiver 18. Next, on the basis of the POI position data 83, the distance calculation unit 74 calculates the distance-to-POI from the present position of the vehicle to the position of each POI (step S202) . Concretely, on the basis of the obtained own position information and the POI position data 83 corresponding to each POI which can be seen via the combiner 9, the distance calculation unit 74 calculates the running distance necessary for the vehicle to reach the POI or the linear distance from the vehicle to the POI as the distance-to-POI.

FIG. 9 is a flowchart indicating the procedure of the process executed by the drawing process unit 75 and the display output unit 76. The flowchart illustrated in FIG. 9 is repeatedly executed in a predetermined cycle.

First, the drawing process unit 75 obtains information on the POI display range (step S301). Concretely, the drawing process unit 75 receives the signal S3 indicating information on the POI display range on the travelling direction lane side and POI display range on the oncoming lane side from the POI display range determination unit 72. Then, the drawing process unit 75 obtains information on the distance-to-POI (step S302). Concretely, the drawing process unit 75 receives the signal S4 indicating the distance-to-POI of each POI from the distance calculation unit 74.

Next, the drawing process unit 75 generates an image in which the POI display of each POI existing in the POI display range is illustrated by using the POI display data 84 (step S303). Concretely, the drawing process unit 75 firstly determines the display target POI existing on the travelling direction lane side by comparing the distance-to-POI corresponding to each POI existing on the travelling direction lane side to the POI display range on the travelling direction lane side, and determines the display target POI on the oncoming lane side by comparing the distance-to-POI corresponding to each POI existing on the oncoming lane side to the POI display range on the oncoming lane side. Next, with reference to the POI display data 84, the drawing process unit 75 generates an image including the POI display corresponding to each display target POI.

Then, the display output unit 76 projects light for displaying the image generated by the drawing process unit 75 onto the combiner 9 (step S304) . Thereby, the driver sees the POI display via the combiner 9 as the virtual image Iv at a position corresponding to the display target POI.

In the above-mentioned embodiment, the present invention is applied to a head-up display, but the present invention may be applied to any other display such as a head mounted display instead of a head-up display.

### [Modification]

Hereinafter, preferred modifications of the above-mentioned embodiment will be described below. Each modification mentioned later can be applied to the above-mentioned embodiment in combination.

### (First Modification)

In FIG. 3, the head-up display 2 lets the driver see the virtual image Iv via the combiner 9. However, the configuration of the head-up display 2 to which the present invention can be applied is not limited to the configuration shown in FIG. 3.

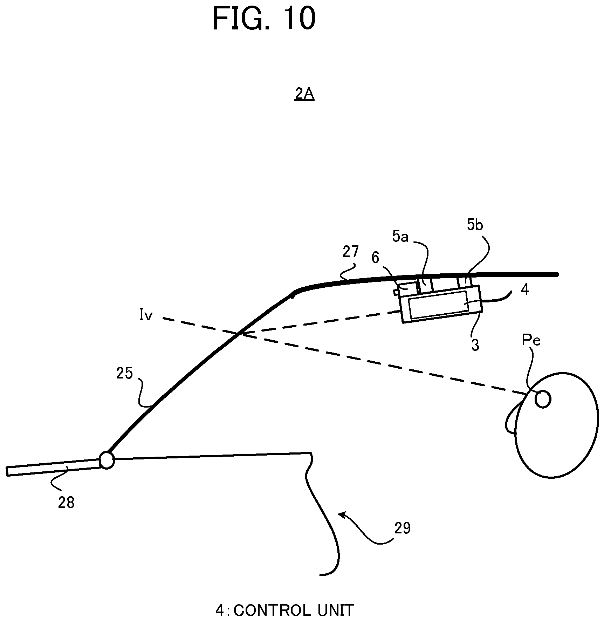

FIG. 10 shows an example of the configuration of the head-up display 2A according to the first modification. As shown in FIG. 10, the light source unit 3 projects light for displaying the image onto the front window 25. The display image emitted from the light source unit 3 is projected onto the front window 25, and the front window 25 displays the display image as the virtual image Iv by reflecting the display image to the eye point Pe. The front window 25 is an example of "the transparent member" according to the present invention.

The light source unit 3 may be provided inside of the dashboard 29 instead of being provided on the ceiling board 27. In this case, on the dashboard 29, there is provided an aperture for letting the light pass towards the combiner 9 shown in FIG. 3 or the front window 25 shown in FIG. 10.

### (Second Modification)

According to the explanation relating to FIG. 4, the control unit 4 of the head-up display 2 includes the image process unit 71, the POI display range determination unit 72, the distance calculation unit 74, the drawing process unit 75 and the display output unit 76. However, the configuration to which the present invention can be applied is not limited to the configuration shown in FIG. 4. Instead of the control unit 4, the system controller 20 of the navigation device 1 may have the image process unit 71, the POI display range determination unit 72, the distance calculation unit 74 and/or the drawing process unit 75, i.e., any process unit (s) other than the display output unit 76. For example, when the system controller 20 has all process units other than the display output unit 76, the navigation device 1 generates an image including the POI display to send the image to the head-up display 2, and the head-up display 2 projects light for displaying the received image. Even in this mode, preferably, the head-up display 2 can let the driver see the POI display corresponding to a safely-accessible POI as the virtual image Iv. In this case, it is noted that the navigation device 1 and the head-up display 2 are an example of "the display device" according to the present invention.

In another example, the head-up display 2 may generate the image including the POI display to project light for displaying the image without communicating with the navigation device 1. In this case, the head-up display 2 has measurement devices such as a GPS receiver and a distance sensor, and obtains the own position information and information on the running speed from these measurement devices. In this case, the head-up display 2 is an example of "the display device" according to the present invention.

### (Third Modification)

The configuration to which the present invention can be applied is not limited to the configuration that the driver visually recognizes the POI display by the head-up display 2. Instead, the navigation device 1 may show the POI display. In this case, the navigation device 1 obtains the front image If from the camera 6 and superimposes the POI display on the position of the POI in the front image If. In this case, the front image If is an example of "the photographed image" according to the present invention and the navigation device 1 is an example of "the display device" according to the present invention.

In another example, the navigation device 1 displays an graphic image (computer generated image) schematically illustrating the front image If, and superimposes the POI display on the position of the POI in the graphic image. In this case, the graphic image is an example of "the image representing scenery in the traveling direction" according to the present invention and the navigation device 1 is an example of "the display device" according to the present invention.

### (Fourth Modification)

Instead of obtaining the running speed of the vehicle from a signal supplied from the distance sensor 13 which measures vehicle speed pulses, the POI display range determination unit 72 may calculate the running speed of the vehicle based on the variation width of the present position obtained from the GPS receiver 18 in a predetermined cycle.

### (Fifth Modification)

The head-up display 2 according to the embodiment has a camera 6, and the image process unit 71 recognizes the travelling lane based on images supplied from the camera 6 to calculate the travelling direction lane number Nrf and the oncoming lane number Nrb. However, the configuration to which the present invention can be applied is not limited to the configuration. Instead of this, the display system 100 does not have a camera 6, and the control unit 4 calculates the travelling direction lane number Nrf and the oncoming lane number Nrb based on the own position information and the information on the running road. For example, in a case that the map data stored on the data storage unit 36 includes information on the number of the travelling direction lanes and the position information of each lane, the control unit 4 receives the above-mentioned information from the navigation device 1, and recognizes the position of the travelling lane in the travelling direction lanes based on the own position information, and calculates the travelling direction lane number Nrf and the oncoming lane number Nrb.

### (Sixth Modification)

With reference to the POI display timing table 82 in FIG. 5, the POI display range determination unit 72 determines the POI display range based on the running speed and the position of the travelling lane in the travelling direction lanes specified by the travelling direction lane number Nrf and the oncoming lane number Nrb. However, the determination method in which the present invention can be applied is not limited to the above-mentioned method. Instead of this, the POI display range determination unit 72 may determine the POI display range based on either one of the position of the travelling lane in the travelling direction lanes or the running speed.

### (Seventh Modification)

The POI display range determination unit 72 may determine the POI display range based on traffic jam information instead of or in addition to the running speed and/or the position of the travelling lane in the travelling direction lanes. Concretely, in a case of determining that there is a traffic j am in the travelling lane based on the traffic jam information included in VICS information, the POI display range determination unit 72 shifts the POI display range farther from the present position of the vehicle compared to a case of determining that there is no traffic jam in the travelling lane.

Generally, it is difficult to change the running lane in the case that there is a traffic jam while it is easy to change the running lane in the case that there is no traffic jam. Thus, according to the seventh modification, the POI display range determination unit 72 selects a POI distant from the present position as the display target POI when there is a traffic jam. Thereby, the head-up display 2 can show the POI display only corresponding to a safely-accessible POI.

When a facility that the user wants to drop by or the type of the facility has been already specified by the user and the lane change is needed to drop by the specified facility, the head-up display 2 may expand the POI display range to be compared to the distance-to-POI of the specified facility towards the direction away from the present position of the vehicle. In this case, the head-up display 2 may output the POI display corresponding to the specified facility even when the driver cannot see the specified facility via the combiner 9 yet.

### (Ninth Modification)

The head-up display 2 may determine the POI display range based on the distance between the travelling lane and the facility instead of the travelling direction lane number Nrf and the oncoming lane number Nrb. Concretely, the distance between the travelling lane and the facility herein indicates distance in the crosswise direction of the travelling lane between the travelling lane and the facility. Then, for example, the head-up display 2 calculates the distance between the travelling lane and the facility based on the position information included in the map data, and determines the POI display range by using the calculated distance as an input value of a predetermined map or equation. Even in this mode, preferably, the head-up display 2 can suppress indication of unnecessary information and display information on a safely-accessible facility.

### INDUSTRIAL APPLICABILITY

Preferably, this invention can be applied to a head-up display displaying the route information for guiding the driver and the vehicle information or to a navigation device superimposing guide indication on an image captured by a camera.

### BRIEF DESCRIPTION OF REFERENCE NUMBERS

- 1: Navigation device
- 2: Head-up display
- 3: Light source unit
- 9: Combiner
- 25: Front window
- 28: Hood
- 29: Dashboard

## Claims

1. A display device comprising:
a display unit (9, 25) configured to let a traveler in a moving body visually recognize scenery in front of the moving body and information on a facility existing in the scenery; and
a display control unit (71, 72, 74, 75, 76) configured to display the information about the facility on the display unit at a time when distance between the moving body and the facility is equal to or shorter than a first predetermined distance, **characterized in that**;
the display control unit is configured to determine a travelling lane that is a lane on road where the moving body is travelling;
the display control unit is configured to change the first predetermined distance based on:
a travelling direction lane number of the travelling lane, wherein travelling direction lanes are sequentially numbered from the road shoulder side; or
the distance in the crosswise direction of the travelling lane between the travelling lane and the facility.

2. The display device according to claim 1,
wherein the device further comprises a present position information obtaining unit configured to measure a present position of the moving body to obtain present position information thereof; and
wherein the display control unit is configured to display the information about the facility on a transparent member (9, 25) positioned between a viewpoint of the traveler in the moving body and scenery in traveling direction of the moving body based on the present position information, the facility being included in the scenery.

3. The display device according to claim 2,
wherein the display control unit is configured to display the information about the facility at a position in accordance with a position of the facility in the scenery seen via the transparent member.

4. The display device according to claim 1, further comprising
a present position information obtaining unit configured to measure a present position of the moving body to obtain present position information thereof;
an image obtaining unit (71) configured to obtain a front scenery image that is either a photographed image captured toward travelling direction of the moving body or an image representing scenery in the traveling direction,
wherein the display control unit configured to superpose the information about the facility on the front scenery image displayed by the display unit based on the present position information, the facility being included in the front scenery image.

5. The display device according to any one of claims 1 to 6,
wherein the display control unit is configured to change the first predetermined distance in accordance with speed of the moving body.

6. The display device according to any one of claims 1 to 5,
wherein the display control unit is configured not to display the information on a facility existing within a second predetermined distance smaller than the first predetermined distance from the moving body, and
wherein the display control unit is configured to change the second predetermined distance based on the position of the travelling lane.

7. The display device according to claim 8,
wherein the display control unit is configured to change the second predetermined distance in accordance with speed of the moving body.

8. The display device according to any one of claims 1 to 10,
wherein the display control unit is configured to change the first predetermined distance in accordance with traffic jam information on the road where the moving body is travelling.

9. A control method executed by a display device, comprising
a display control process for displaying information about a facility on a display unit at a time when distance between a moving body and the facility is equal to or shorter than a first predetermined distance, the display unit letting a traveler in the moving body visually recognize scenery in front of the moving body and the information on the facility existing in the scenery, and wherein in the display control process,
a travelling lane that is a lane on road where the moving body is travelling is determined; and:
the first predetermined distance is changed based on a position on:
the travelling direction lane number of the travelling lane, wherein the travelling direction lanes are sequentially numbered from the road shoulder side; or
the distance in the crosswise direction of the travelling lane between the travelling lane and the facility.

## Patentansprüche

1. Anzeigevorrichtung, Folgendes umfassend:
eine Anzeigeeinheit (9, 25), die konfiguriert ist, um einen Reisenden in einem sich bewegenden Körper eine Landschaft vor dem sich bewegenden Körper und Informationen über eine in der Landschaft vorhandene Einrichtung visuell erkennen zu lassen; und
eine Anzeigesteuereinheit (71, 72, 74, 75, 76), die konfiguriert ist, um die Informationen über die Einrichtung auf der Anzeigeeinheit zu einem Zeitpunkt anzuzeigen, wenn ein Abstand zwischen dem sich bewegenden Körper und der Einrichtung gleich oder kürzer als ein erster vorbestimmter Abstand ist, **dadurch gekennzeichnet, dass**;
die Anzeigesteuereinheit konfiguriert ist, um eine Fahrspur zu bestimmen, die eine Spur auf einer Straße ist, auf der der sich bewegende Körper fährt;
die Anzeigesteuereinheit konfiguriert ist, um den ersten vorbestimmten Abstand basierend auf Folgendem zu ändern:
einer Fahrtrichtungsspurnummer der Fahrspur, wobei Fahrtrichtungsspuren von der Straßenstandstreifenseite aus fortlaufend nummeriert sind; oder
dem Abstand in der Querrichtung der Fahrspur zwischen der Fahrspur und der Einrichtung.

2. Anzeigevorrichtung nach Anspruch 1, wobei die Vorrichtung ferner eine Einheit zum Erhalten gegenwärtiger Positionsinformationen umfasst, die konfiguriert ist, um eine gegenwärtige Position des sich bewegenden Körpers zu messen, um gegenwärtige Positionsinformationen davon zu erhalten; und
wobei die Anzeigesteuereinheit konfiguriert ist, um die Informationen über die Einrichtung auf einem transparenten Element (9, 25) anzuzeigen, das zwischen einem Blickpunkt des Reisenden in dem sich bewegenden Körper und einer Landschaft in Fahrtrichtung des sich bewegenden Körpers positioniert ist, basierend auf den gegenwärtigen Positionsinformationen, wobei die Einrichtung in der Landschaft eingeschlossen ist.

3. Anzeigevorrichtung nach Anspruch 2, wobei die Anzeigesteuereinheit konfiguriert ist, um die Informationen über die Einrichtung an einer Position in Übereinstimmung mit einer Position der Einrichtung in der Landschaft, die über das transparente Element gesehen wird, anzuzeigen.

4. Anzeigevorrichtung nach Anspruch 1, ferner umfassend eine Einheit zum Erhalten gegenwärtiger Positionsinformationen, die konfiguriert ist, um eine gegenwärtige Position des sich bewegenden Körpers zu messen, um gegenwärtige Positionsinformationen davon zu erhalten;
eine Bilderhaltungseinheit (71), die konfiguriert ist, um ein Frontalbild der Landschaft zu erhalten, das entweder ein fotografiertes Bild, das zu der Fahrtrichtung des sich bewegenden Körpers hin aufgenommen wird, oder ein Bild ist, das die Landschaft in der Fahrtrichtung darstellt,
wobei die Anzeigesteuereinheit konfiguriert ist, um die Informationen über die Einrichtung auf dem Frontalbild der Landschaft, das durch die Anzeigeeinheit angezeigt wird, basierend auf den gegenwärtigen Positionsinformationen zu überlagern, wobei die Einrichtung in dem Frontalbild der Landschaft eingeschlossen ist.

5. Anzeigevorrichtung nach einem der Ansprüche 1 bis 6, wobei die Anzeigesteuereinheit konfiguriert ist, um den ersten vorbestimmten Abstand in Übereinstimmung mit einer Geschwindigkeit des sich bewegenden Körpers zu ändern.

6. Anzeigevorrichtung nach einem der Ansprüche 1 bis 5, wobei die Anzeigesteuereinheit konfiguriert ist, um die Informationen über eine Einrichtung, die innerhalb eines zweiten vorbestimmten Abstands, der kleiner als der erste vorbestimmte Abstand ist, von dem sich bewegenden Körper vorhanden ist, nicht anzuzeigen, und wobei die Anzeigesteuereinheit konfiguriert ist, um den zweiten vorbestimmten Abstand basierend auf der Position der Fahrspur zu ändern.

7. Anzeigevorrichtung nach Anspruch 8, wobei die Anzeigesteuereinheit konfiguriert ist, um den zweiten vorbestimmten Abstand in Übereinstimmung mit einer Geschwindigkeit des sich bewegenden Körpers zu ändern.

8. Anzeigevorrichtung nach einem der Ansprüche 1 bis 10, wobei die Anzeigesteuereinheit konfiguriert ist, um den ersten vorbestimmten Abstand in Übereinstimmung mit Verkehrsstauinformationen auf der Straße, auf der der sich bewegende Körper fährt, zu ändern.

9. Steuerverfahren, das durch eine Anzeigevorrichtung ausgeführt wird, umfassend einen Anzeigesteuervorgang zum Anzeigen von Informationen über eine Einrichtung auf einer Anzeigeeinheit zu einem Zeitpunkt, wenn der Abstand zwischen einem sich bewegenden Körper und der Einrichtung gleich oder kürzer als ein erster vorbestimmter Abstand ist, wobei die Anzeigeeinheit einen Reisenden in dem sich bewegenden Körper die Landschaft vor dem sich bewegenden Körper und die Informationen über die in der Landschaft vorhandene Einrichtung visuell erkennen lässt, und wobei in dem Anzeigesteuervorgang eine Fahrspur, die eine Spur auf der Straße ist, auf der der sich bewegende Körper fährt, bestimmt wird; und:
der erste vorbestimmte Abstand basierend auf einer Position auf Folgendem geändert wird:
der Fahrtrichtungsspurnummer der Fahrspur, wobei die Fahrtrichtungsspuren von der Straßenstandstreifenseite aus fortlaufend nummeriert sind; oder
dem Abstand in der Querrichtung der Fahrspur zwischen der Fahrspur und der Einrichtung.

## Revendications

1. Un dispositif d'affichage comprenant :
une unité d'affichage (9, 25) configurée pour permettre à un voyageur dans un corps en mouvement de reconnaître visuellement un paysage devant le corps en mouvement et des informations sur une installation existant dans le paysage ; et
une unité de commande d'affichage (71, 72, 74, 75, 76) configurée pour afficher les informations concernant l'installation sur l'unité d'affichage à un moment où la distance entre le corps en mouvement et l'installation est égale ou inférieure à une première distance prédéterminée, **caractérisé en ce que** ;
l'unité de commande d'affichage est configurée pour déterminer une voie de circulation qui est une voie sur une route où le corps en mouvement circule ;
l'unité de commande d'affichage est configurée pour modifier la première distance prédéterminée en fonction :
d'un numéro de voie de sens de circulation de la voie de circulation, les voies de sens de circulation étant numérotées de manière séquentielle à partir de l'accotement de la route ; ou
la distance dans le sens transversal de la voie de circulation entre la voie de circulation et l'installation.

2. Dispositif d'affichage selon la revendication 1, dans lequel le dispositif comprend en outre une unité d'obtention d'informations de position actuelle configurée pour mesurer une position actuelle du corps en mouvement afin d'obtenir des informations de position actuelle de celui-ci ; et
dans lequel l'unité de commande d'affichage est configurée pour afficher les informations concernant l'installation sur un élément transparent (9, 25) positionné entre un point de vue du voyageur dans le corps en mouvement et le paysage dans le sens de circulation du corps en mouvement en fonction des informations de position actuelle, l'installation faisant partie du paysage.

3. Dispositif d'affichage selon la revendication 2,
dans lequel l'unité de commande d'affichage est configurée pour afficher les informations concernant l'installation à une position selon une position de l'installation dans le paysage vu par le biais de l'élément transparent.

4. Dispositif d'affichage selon la revendication 1, comprenant en outre une unité d'obtention d'informations de position actuelle configurée pour mesurer une position actuelle du corps en mouvement afin d'obtenir des informations de position actuelle de celui-ci ;
une unité d'obtention d'image (71) configurée pour obtenir une image de paysage qui est soit une image photographiée capturée dans le sens de circulation du corps en mouvement, soit une image représentant un paysage dans le sens de circulation,
dans lequel l'unité de commande d'affichage est configurée pour superposer les informations concernant l'installation sur l'image de paysage avant affichée par l'unité d'affichage en fonction des informations de position actuelle, l'installation faisant partie de l'image de paysage avant.

5. Dispositif d'affichage selon l'une quelconque des revendications 1 à 6,
dans lequel l'unité de commande d'affichage est configurée pour modifier la première distance prédéterminée selon la vitesse du corps en mouvement.

6. Dispositif d'affichage selon l'une quelconque des revendications 1 à 5,
dans lequel l'unité de commande d'affichage est configurée pour ne pas afficher les informations sur une installation existant à moins d'une seconde distance prédéterminée inférieure à la première distance prédéterminée du corps en mouvement, et
dans lequel l'unité de commande d'affichage est configurée pour modifier la seconde distance prédéterminée en fonction de la position de la voie de circulation.

7. Dispositif d'affichage selon la revendication 8,
dans lequel l'unité de commande d'affichage est configurée pour modifier la seconde distance prédéterminée selon la vitesse du corps en mouvement.

8. Dispositif d'affichage selon l'une quelconque des revendications 1 à 10,
dans lequel l'unité de commande d'affichage est configurée pour modifier la première distance prédéterminée selon des informations d'embouteillage sur la route où le corps en mouvement circule.

9. Un procédé de commande exécuté par un dispositif d'affichage, comprenant
un procédé de commande d'affichage pour afficher des informations concernant une installation sur une unité d'affichage à un moment où la distance entre un corps en mouvement et l'installation est égale ou inférieure à une première distance prédéterminée,
l'unité d'affichage laissant un voyageur dans le corps en mouvement reconnaître visuellement le paysage devant le corps en mouvement et les informations sur l'installation existante dans le paysage, et dans lequel, dans le procédé de commande d'affichage, une voie de circulation, qui est une voie sur une route où le corps circule, est déterminée ; et :
la première distance prédéterminée est modifiée en fonction d'une position sur :
le numéro de voie de sens de circulation de la voie de circulation, dans lequel les voies de sens de circulation sont numérotées de manière séquentielle à partir de l'accotement de la route ; ou
la distance dans le sens transversal de la voie de circulation entre la voie de circulation et l'installation.
